# EUROPEAN PATENT APPLICATION

(11) **EP 4 624 027 A1**
(43) Date of publication of application: **01.10.2025**
(21) Application number: 22969795.8
(22) Date of filing: 30.12.2022
(51) Int. Cl.: B01D 67/00, C12Q 1/6869

(54) **FILM FORMING STRUCTURE AND FORMING METHOD**

(71) Applicant: BGI Shenzhen, Shenzhen, Guangdong 518083 (CN); BGI Shenzhen Co., Limited, Shenzhen, Guangdong 518083 (CN)
(72) Inventor: ZHU, Yening, Shenzhen, Guangdong 518083 (CN); DONG, Yuliang, Shenzhen, Guangdong 518083 (CN); LI, Yuxiang, Shenzhen, Guangdong 518083 (CN); ZHANG, Yuning, Shenzhen, Guangdong 518083 (CN); YUN, Quanxin, Shenzhen, Guangdong 518083 (CN); ZHANG, Wenwei, Shenzhen, Guangdong 518083 (CN); XU, Xun, Shenzhen, Guangdong 518083 (CN)
(74) Representative: HGF
(86) International application number: PCT/CN2022/144015
(87) International publication number: WO 2024/138652

(57) **Abstract**

The present application provides a film forming structure and a forming method. The forming structure comprises: a support body, the inside of the support body being filled with a first buffer solution, the surface of the first buffer solution being provided with a membrane solution, the surface of the membrane solution being provided with a second buffer solution, and the osmotic pressure of the first buffer solution being greater than the osmotic pressure of the second buffer solution. The forming structure and the forming method can quickly respond to a supported object having a specific structure, increasing the operable window thereof, achieving controllability and uniformity, shortening the film forming period, and saving corresponding costs.

## Description

### TECHNICAL FIELD

The present application belongs to the technical field of membrane, and relates to a forming structure and forming method for a membrane.

### BACKGROUND

At present, for the preparation of bilayer membranes in commercial, the technical points focus on the ways and means of coating, that is, considering the optimization of the support or its array structure, surface properties or adjusting the various ratios of the membrane reagents to achieve coating on the support. Correspondingly, during bilayer formation, aside from inherent properties, the process is also subject to external influences. However, there remains a lack of controllable methods to facilitate bilayer membrane formation. Most techniques rely entirely on spontaneous processes, resulting in prolonged forming cycles, poor uniformity, and significant batch-to-batch variations.

The main drawbacks of the existing membrane-forming process of bilayer membrane are: 1. poor controllability, the existing membrane-forming process excessively depends on its spontaneity, and spontaneity is obviously interfered by external factors, for example, a certain structure of support (with a small caliber) will lead to a lengthened membrane forming cycle and lack of controllability; 2. poor uniformity, first of all, there are differences between items, and the later operational processes can greatly lead to differences, ultimately resulting in significant individual differences in product performance, which is not conducive to later operational processing; 3. indirectly increasing production difficulty and raising costs.

### SUMMARY

In the present application, a forming structure and a forming method for a membrane are provided. The forming structure and the forming method can achieve rapid response and increase the operable window to the support even with a specific structure, realizing controllability and uniformity, shortening the membrane-forming period, and saving the corresponding cost.

One object of the present application is to provide a membrane forming structure. The membrane forming structure includes a support body, wherein the support body is internally filled with a first buffer solution. A membrane solution is disposed on a surface of the first buffer solution, and a second buffer solution is disposed on a surface of the membrane solution (more specifically, the surface of the other side). The osmotic pressure of the first buffer solution is greater than the osmotic pressure of the second buffer solution.

In the present application, the process of amphiphilic molecules forming a bilayer membrane is a self-assembly process driven from the hydrophobic effect, which is determined by the inherent properties of the material, and different membrane materials exhibit varying degrees of spontaneity. However, for the same membrane material, the self-assembly process is influenced by environmental factors, such as solvent viscosity, composition ratio, temperature, and humidity. The membrane-forming structure described herein utilizes the principle that membrane materials block macromolecules through water permeability. By creating a higher osmotic pressure below the membrane than above, an osmotic pressure difference is established between the two sides. As a result, water molecules move toward the region of higher osmotic pressure, generating an upward convex pulling force on the membrane. This facilitates the outward movement of solvent from the membrane solution, thereby accelerating the formation of the bilayer membrane

As a preferred technical solution of the present application, an osmotic pressure of the first buffer solution is 180-400 mOsmol/kg, for example, 374 mOsmol/kg, 281 mOsmol/kg or 187 mOsmol/kg.

As a preferred technical solution of the present application, the first buffer solution includes a salt solution of potassium chloride, sodium chloride, potassium ferricyanide, potassium ferrocyanide, sodium ferricyanide, sodium ferrocyanide, sodium carbonate, or sodium bicarbonate. In some further preferred embodiments, the first buffer solution may optionally include other components according to the actual requirements of the subsequent steps, for example, hepes, hepes-Na-hepes, or K₂HPO₄-KH₂PO₄.

As a preferred technical solution of the present application, an osmotic pressure of the second buffer solution is 140-300 mOsmol/kg, for example, 289 mOsmol/kg, 154 mOsmol/kg, or 145 mOsmol/kg.

As a preferred technical solution of the present application, the second buffer solution includes a salt solution of potassium chloride, sodium chloride, potassium ferricyanide, potassium ferrocyanide, sodium ferricyanide, sodium ferrocyanide, sodium carbonate, and sodium bicarbonate. In some further preferred embodiments, the second buffer solution may optionally include other components according to the practical requirements of subsequent steps, for example, hepes, hepes-Na-hepes, or K₂HPO₄-KH₂PO₄. In the present application, the difference between the osmotic pressure of the first buffer solution and the second buffer solution can be used to control the membrane-forming process, and specifically, in a case where the osmotic pressure difference is increased, the formation of the bilayer membrane can be accelerated and a membrane with a large capacitance value can be obtained, but the membrane will be broken when the osmotic pressure difference is too large; in a case where the osmotic pressure difference is decreased, the effect of accelerating the formation of the bilayer membrane will not be significant, and the obtained membrane can have slightly larger capacitance value and be relatively stable.

As a preferred technical solution of the present application, the membrane solution prepares a bilayer membrane by self-assembly.

As a preferred technical solution of the present application, the membrane solution includes an amphiphilic membrane material and a solvent.

The amphiphilic membrane material includes any one or a combination of at least two of DPHPC, DPHPG, DPPC, POPC or DOPE.
DPHPC refers to 1,2-diphytanoyl-sn-glycero-3-phosphocholine;
DPHPG refers to 1,2-diphytanoyl-sn-glycero-3-phospho-(1'-rac-glycerol);
DPPC refers to1,2-dipalmitoyl-sn-glycero-3-phosphocholine;
POPC refers to phosphatidylcholine(1-palmitoyl-2-oleoyl-glycero-3-phosphocholine);
DOPE refers to 1,2-dioleoyl-sn-glycero-3-phosphoethanolamine.

The solvent includes a combination of one or more of decane, dodecane, or n-octane and any one or at least two of AR20, AR30, or PDMS-9.

AR20 refers to silicone oil with a viscosity of 20 mpa.s (25°C), and is also called polyphenylmethylsiloxane.

In the present application, the types and substances of the first buffer solution, the second buffer solution and the membrane solution are limited only to the enumeration of possibilities, and specific selections can be made according to the preparation requirements of the membrane, and no further limitation is made herein.

Another object of the present application is to provide a forming method for a membrane, which includes the forming structure as described above.

As a preferred technical solution of the present application, the forming method includes:
under vacuum conditions, injecting the first buffer solution into the support body, using the second buffer solution to push the membrane solution along the support body to cover the surface of the first buffer solution, and standing to obtain the bilayer membrane.

As a preferred technical solution of the present application, the forming method includes:
injecting the first buffer solution into the support body, using the first buffer solution to push the membrane solution along the support body to cover the surface of the first buffer solution, allowing the membrane solution to undergo self-assembly and reach a stable state, replacing the first buffer solution above the membrane solution with the second buffer solution, and standing to obtain the bilayer membrane.

In the present application, the "stable state" (referenced after the membrane solution undergoes self-assembly) denotes the condition where the membrane solution on the support has formed a bilayer, manifested by a capacitance value reaching the theoretical range, and the capacitance value is greater than 10 pF and less than 200 pF.

In the present application, the coating process exhibits a narrow process parameter window. Without modifying existing coating parameters, a second forming method may be adopted as an alternative.

### BRIEF DESCRIPTION OF DRAWINGS

FIG. 1 is a schematic diagram of the membrane optimization solution with narrow process parameters optimized by the osmotic pressure principle in the present application;
FIG. 2 is a schematic diagram of the membrane-forming optimization solution with an easily extensible membrane material optimized by the osmotic pressure principle in the present application;
FIG. 3 is a schematic diagram of the principle elaboration of the present application;
FIG. 4 is a confocal laser scanning microscopy image of an unqualified membrane formed under iso-osmotic pressure;
FIG. 5 is a confocal laser scanning microscopy image of an unqualified membrane formed under iso-osmotic pressure after treatment with the optimization method;
FIG. 6 is a map of the membrane capacitance of the membrane formed under iso-osmotic pressure after standing for 24 h;
FIG. 7 is a distribution diagram of the membrane capacitance value of the membrane formed under iso-osmotic pressure after standing for 24 h;
FIG. 8 is a map of the membrane capacitance of the formed membrane standing for 24 h under iso-osmotic pressure after treatment with the optimization method;
FIG. 9 is a distribution diagram of the membrane capacitance value of the formed membrane standing for 24 h under iso-osmotic pressure after treatment with the optimization method;
FIG. 10 is a time-dependent graph of membrane capacitance of the formed membrane standing for 24 h under iso-osmotic pressure before and after treatment with the optimization method;
FIG. 11 is a time-dependent graph of membrane capacitance of the formed membrane at non-isotonic pressure during the standing process in Example 3;
FIG. 12 is a time-dependent graph of membrane capacitance of the formed membrane standing for 24 h under iso-osmotic pressure before and after treatment with the optimization method in Example 4; and
FIG. 13 is a time-dependent graph of membrane capacitance of the formed membrane standing for 24 h under iso-osmotic pressure before and after treatment with the optimization method in Example 5.

The present application is described in further detail below. However, the following embodiments are merely simple examples of the present application and do not represent or limit the protection scope of the present application, and the protection scope of the present application is subject to the claims.

### DETAILED DESCRIPTION

The technical solutions of the present application are further described below in terms of specific embodiments with drawings.

In order to better illustrate the present application and facilitate the understanding of the technical solution of the present application, the typical but non-limiting embodiments of the present application are as follows.

Reagents used in the embodiments of the present application are as follows.

First buffer solution: 500 mL; 200 mmol/L KCl, 1 mmol/L HEPES, 1 mmol/L EDTA, osmotic pressure 374 mOsmol/kg; designated as buffer1 in the following embodiments. 100 mL of buffer1 is taken and added with a Rhodamine dye with wt% of 0.02% to obtain a solution, which is designated buffer1-1 in the following embodiments.

Second buffer solution: 500 mL; 155 mmol/L KCl, 1 mmol/L HEPES, 1 mmol/L EDTA, osmotic pressure 289 mOsmol/kg; designated as buffer2 in the following embodiments.

Membrane solution: 3 mL of 10 mg/mL DPHPC; designated as reagent A in the following embodiments. 1 mL of reagent A is taken and added to a difluoro-boron-dipyrromethene dye with wt% of 0.01% to obtain a solution, which is designated reagent A-1 in the following embodiments.

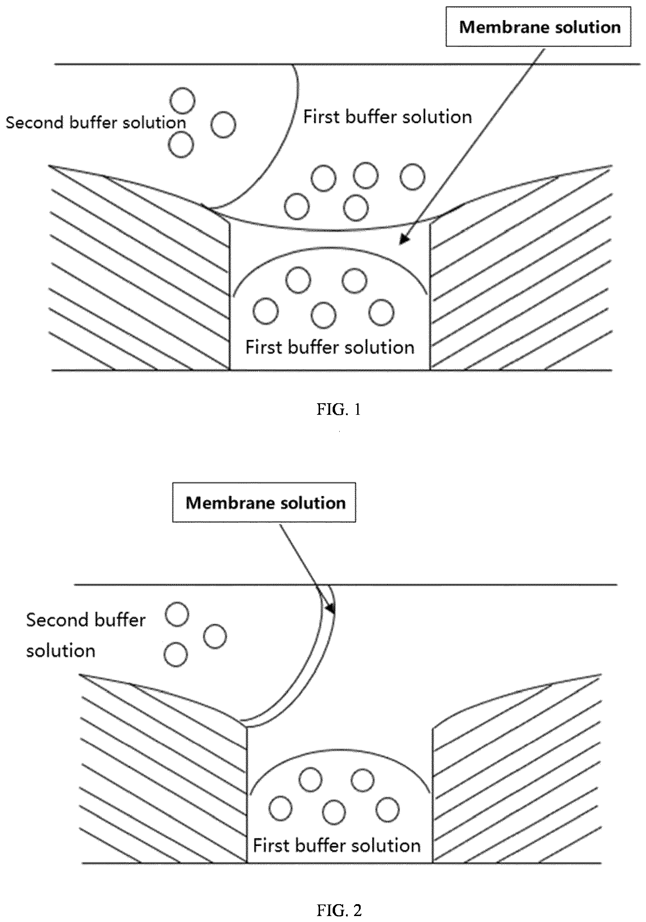

The structure of the support body is shown in FIG. 1.

### Example 1

This example provides a forming method for a membrane, and the forming method includes:
buffer1-1 was injected into the support body, and the buffer2 was used to push the membrane solution (reagent A-1) along the support body to cover the buffer 1-1, stood for 24 h, and after the membrane solution was self-assembled and in a stable state, a bilayer membrane was obtained.

### Example 2

This example provides a forming method for a membrane, and the forming method includes:
buffer1 was injected into the support body, and the buffer1 was used to push the membrane solution (reagent A) along the support body to cover the buffer 1, stood for 24 h, after the membrane solution was self-assembled and in a stable state, the buffer2 was used to displace the buffer 1 above the membrane solution, and stood for 30 min to obtain a bilayer membrane.

### Comparative Example 1

This comparative example provides a forming method for a membrane, and the forming method includes:
buffer1-1 was injected into the support body, and the buffer1 was used to push the membrane solution (reagent A-1) along the support body to cover the buffer 1-1, and after the membrane solution was self-assembled and in a stable state, that is, stood for 24 h.

### Comparative Example 2

This comparative example provides a forming method for a membrane, and the forming method includes:
buffer1 was injected into the support body, and the buffer1 was used to push the membrane solution (reagent A) along the support body to cover the buffer 1, and after the membrane solution was self-assembled and in a stable state, that is, stood for 24 h.

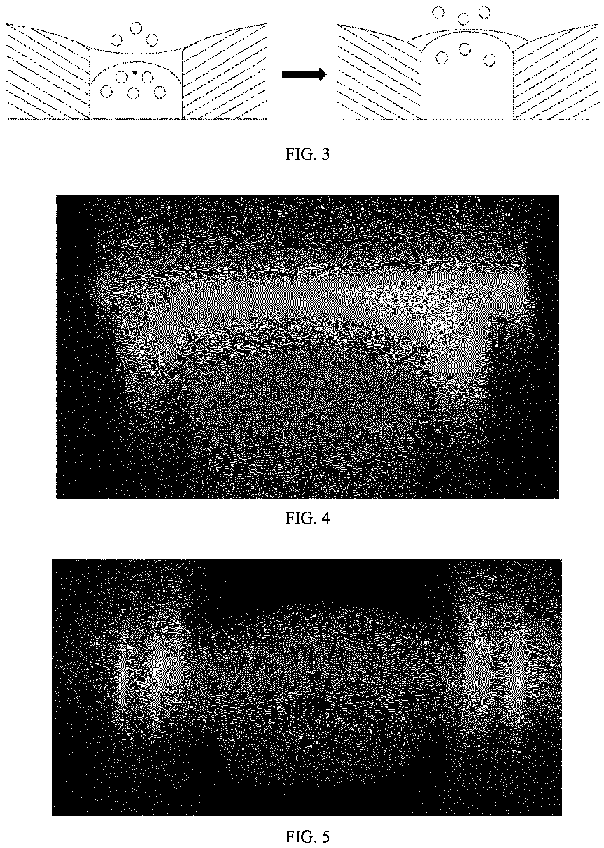

The prepared in Comparative Example 1 was placed under the confocal laser scanning microscope and the membrane shape on the support was scanned by a selected 20 × 10 combined lens with a scanning speed of 5 µm/step. As seen in FIG. 3, a relatively thick membrane layer was observed above buffer1-1 within the support body cavity. The upper buffer1 in the membrane-forming structure of Comparative Example 1 (i.e., the bilayer membrane prepared in Example 1) was replaced with buffer2, and scanned under a scanning microscope to obtain FIG. 4. From the figure, it was observed that the oily solvent in the membrane solution was repelled to the periphery, indicating the formation of a bilayer membrane.

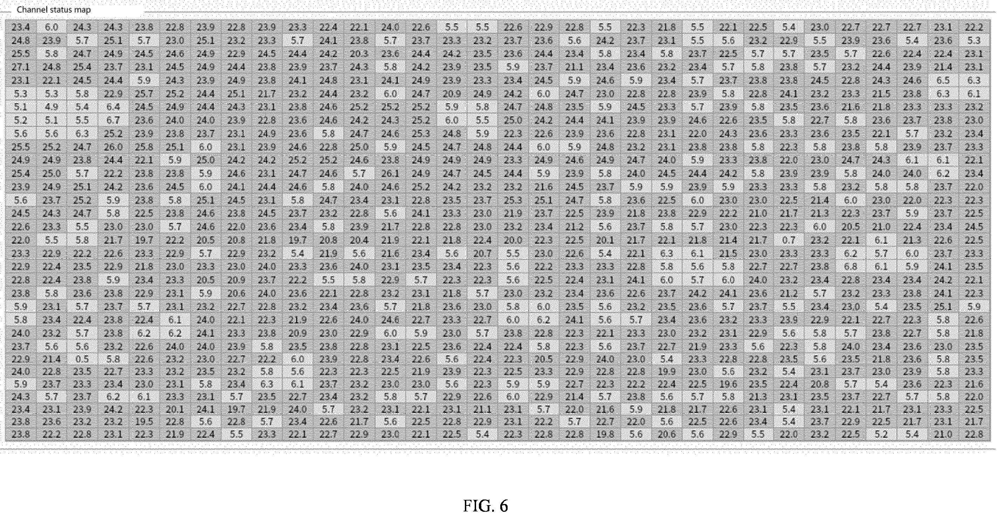

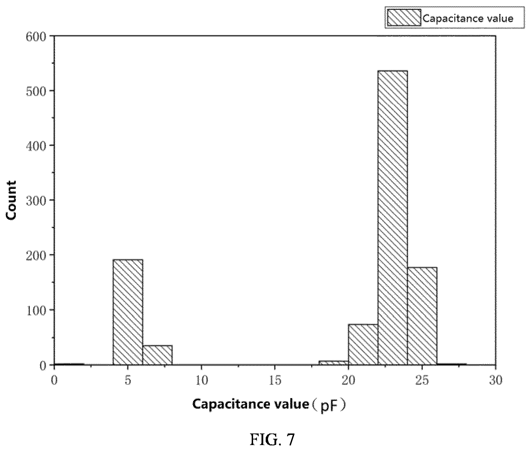

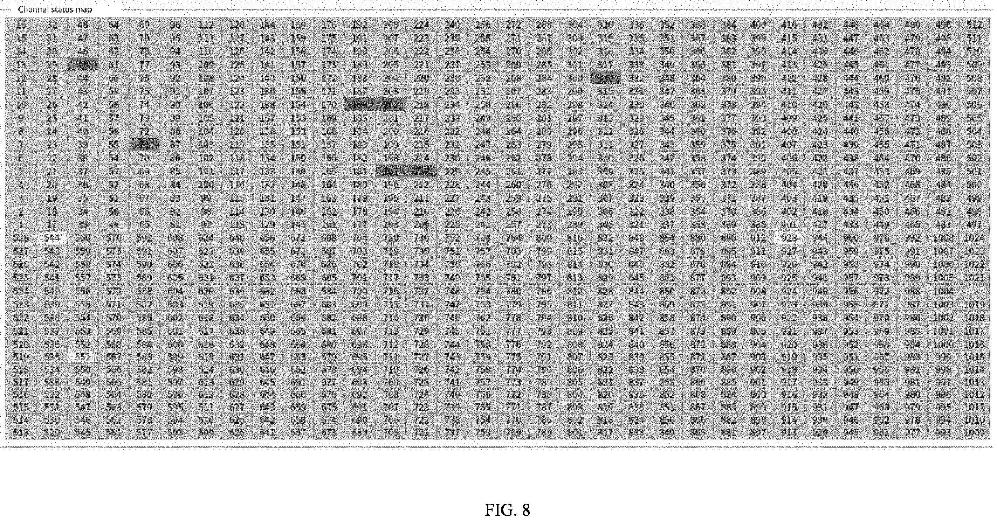

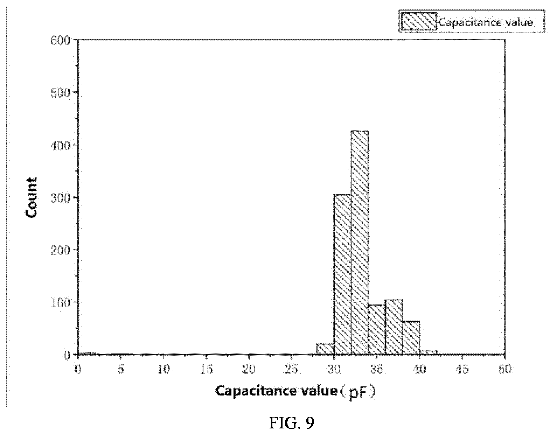

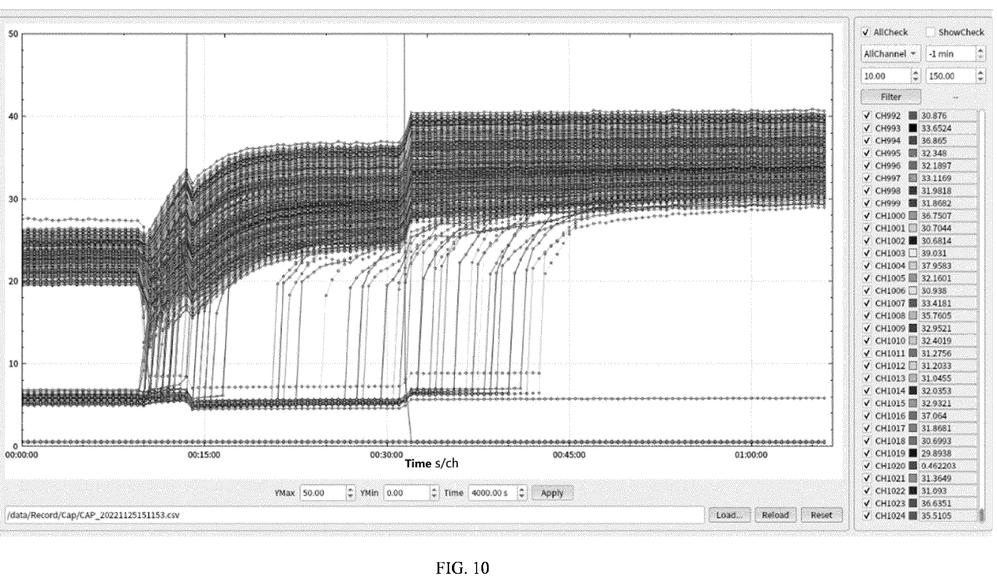

The bilayer membrane obtained in Comparative Example 2 was placed under an instrument of membrane capacitance testing for membrane capacitance value measuring, and the map is shown in FIG. 6, and the capacitance distribution diagram is shown in FIG. 7. It is found that after the formed membrane is stood for 24 h under iso-osmotic pressure, the membrane capacitance is uneven with two peaks having large deviations at 5 pF and 24 pF respectively, and 225 channels do not form a bilayer membrane. The buffer1 was replaced with buffer2 and stood for 30 min (i.e., the bilayer membrane prepared in Example 2) to observe the time-dependence of capacitance change of the membrane. After 1 h of displacement, the obtained map is shown in FIG. 8, and the capacitance distribution is shown in FIG. 9. It was discovered that, apart from 3 channels where no membrane formed at all, only 1 channel out of the 225 that previously lacked a bilayer membrane remained unformed. Consequently, the number of successful channels increased from the previous 796 to 1020 out of 1024 channels. The success rate is thus improved from 77.73% to 99.61%, with good uniformity observed. The time-dependent graph of capacitance is shown in FIG. 10.

### Example 3

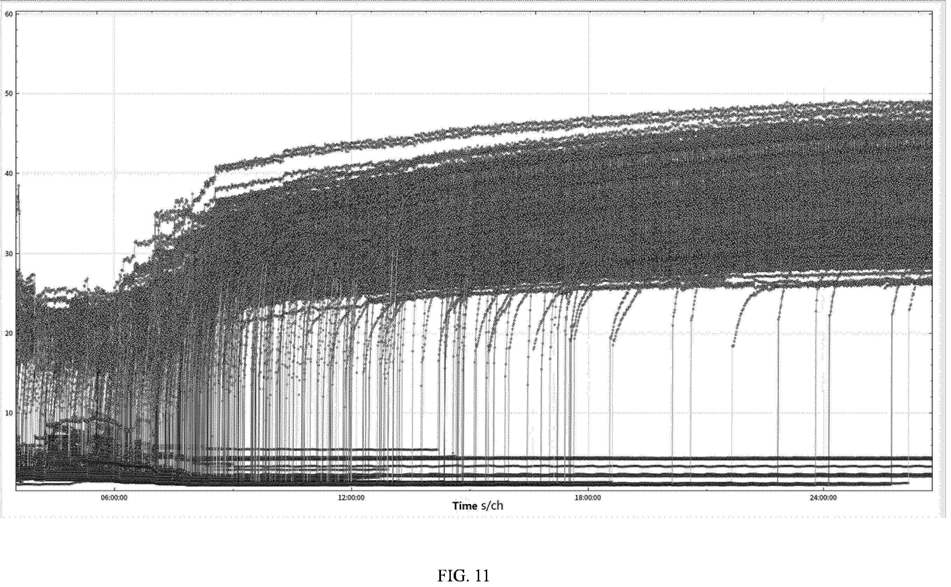

This example provides a forming method for a membrane, and the forming method includes:
under vacuum conditions, buffer1 was injected into the support body, and the buffer2 was used to push the membrane solution (reagent A) along the support body to cover the surface of the buffer 1. It is found by observing the time-dependence of capacitance of the system that, under non-isotonic condition, the self-assembly process was accelerated due to the existence of osmotic pressure difference, and the results showed that after standing for 4 h, a large number of channels began to self-assemble to obtain a bilayer membrane, and after 12 h, 90% of the channels in 1024 channels completed the self-assembly to obtain a bilayer membrane. The time-dependent graph of capacitance is shown in FIG. 11.

### Example 4

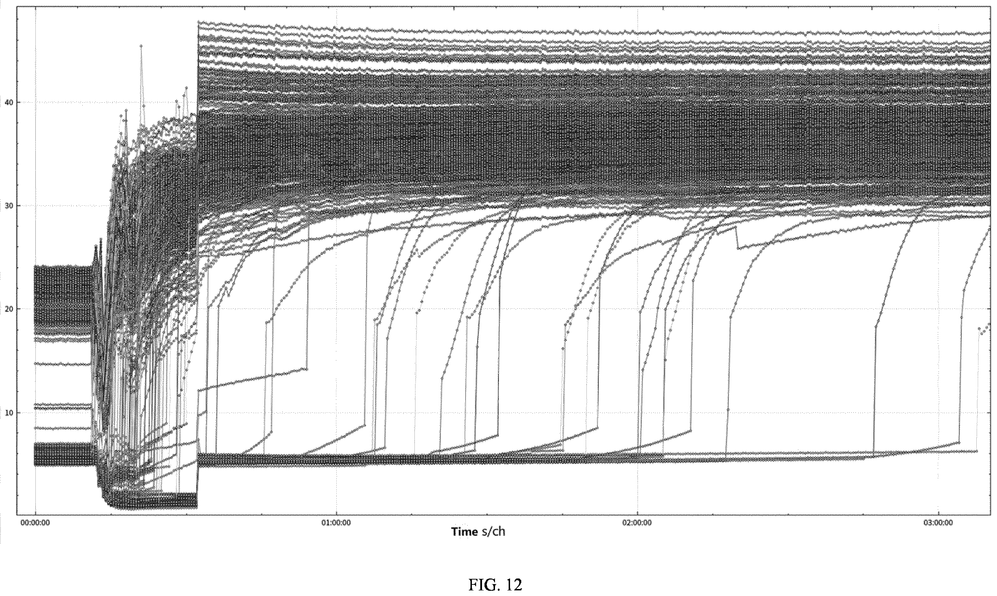

This example provides a forming method for a membrane, and the forming method is the same as Example 2 except that the osmotic pressure of the buffer 1 is 281 mOsmol/kg (named buffer1' in this Example) and the osmotic pressure of the buffer 2 is 154 mOsmol/kg (named buffer2' in this Example). It is found by observing the time-dependence of capacitance of the system that, under isotonic condition, about 200 (20%) existing channels do not form a bilayer membrane. The osmotic pressure difference between buffer1' on the upper layer for displacement and buffer2' on the lower layer is larger than that of Example 2. After 30 min of replacement, 99% of the channels in 1024 channels complete the self-assembly to obtain a bilayer membrane. The time-dependent graph of capacitance is shown in FIG. 12.

### Example 5

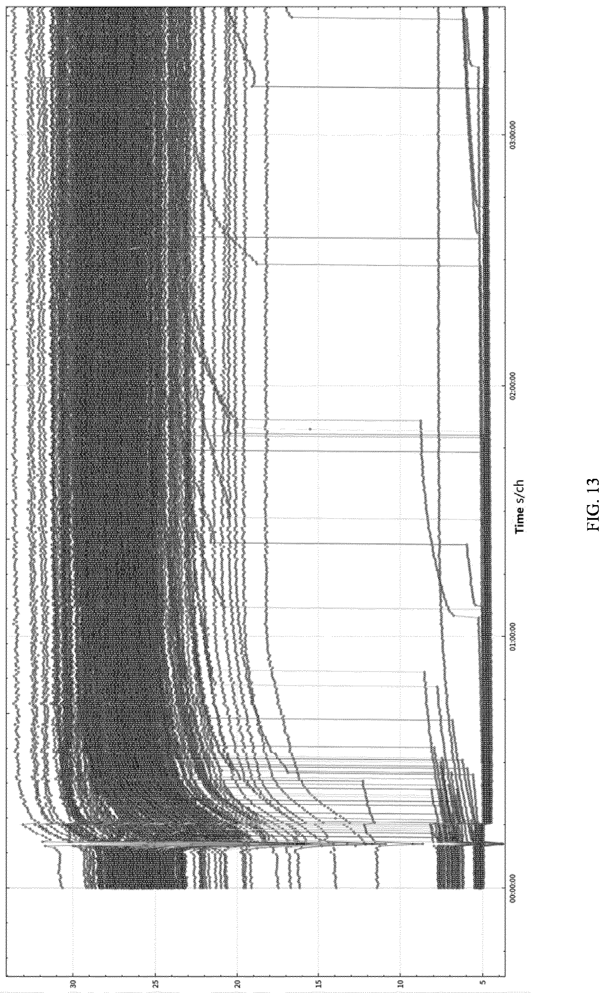

This example provides a forming method for a membrane, and the forming method is the same as Example 2 except that the osmotic pressure of the buffer 1 is 187 mOsmol/kg (named buffer1" in this Example) and the osmotic pressure of the buffer 2 is 145 mOsmol/kg (named buffer2" in this Example). It is found by observing the time-dependence of capacitance of the system that, under isotonic condition, about 200 (20%) existing channels do not form a bilayer membrane. The osmotic pressure difference between buffer1" on the upper layer for displacement and buffer2" on the lower layer is smaller than that of Example 2. After 30 min of replacement, 99% of the channels in 1024 channels complete the self-assembly to obtain a bilayer membrane. The time-dependent graph of capacitance is shown in FIG. 13.

In summary, the present application has the following beneficial effects:
(1) the present application provides a forming structure and a forming method for a membrane, and the forming structure and the forming method utilize the principle of osmotic pressure to accelerate the forming process of a bilayer membrane of the amphiphilic material, and can greatly shorten the production cycle, save costs, and improve production efficiency simultaneously;
(2) the present application provides a forming structure and a forming method for a membrane, and the forming structure and forming method can realize the controllability of the membrane-forming process by controlling the osmotic pressure difference;
(3) the present application provides a forming structure and a forming method for a membrane, and the forming structure and forming method have a wide range of application scenarios and can be targeted at a large product window; and
(4) the present application provides a forming structure and a forming method for a membrane, and the forming structure and forming method endow good uniformity of the formed membrane and a high pass rate per unit time.

The applicant declares that the present application illustrates the detailed structure characteristics of the present application by the above examples, but the present application is not limited to the above detailed structure characteristics, that is, the present application does not necessarily rely on the above detailed structure characteristics to be implemented. Those skilled in the art should understand that any improvements of the present application, the equivalent substitution of selected components, the addition of auxiliary components, and the selection of specific methods shall fall within the protection scope and disclosure scope of the present application.

The above describes in detail the preferred embodiments of the present application. However, the present application is not limited to the specific details in the above embodiments, and various simple variations of the technical solutions of the present application can be made within the scope of the technical conception of the present application, all of these simple variations shall fall within the protection scope of the present application.

It is also to be noted that the various specific technical features described in the above specific embodiments may be combined in any suitable manners without contradiction, and in order to avoid unnecessary repetition, the various possible combinations are not described separately in the present application.

In addition, any combination may be made between the various embodiments of the present application, which shall likewise be regarded as the contents disclosed in the present application, as long as it does not contradict the idea of the present application.

## Claims

1. A forming structure for a membrane, comprising a support body; wherein the support body is internally filled with a first buffer solution, a membrane solution is disposed on a surface of the first buffer solution, a second buffer solution is disposed on a surface of the membrane solution, and the osmotic pressure of the first buffer solution is greater than the osmotic pressure of the second buffer solution.

2. The forming structure according to claim 1, wherein an osmotic pressure of the first buffer solution is 180-400 mOsmol/kg.

3. The forming structure according to claim 1 or 2, wherein the first buffer solution comprises a salt solution of potassium chloride, sodium chloride, potassium ferricyanide, potassium ferrocyanide, sodium ferricyanide, sodium ferrocyanide, sodium carbonate, or sodium bicarbonate.

4. The forming structure according to claim 3, wherein the first buffer solution further comprises hepes, hepes-Na-hepes, or K₂HPO₄-KH₂PO₄.

5. The forming structure according to any one of claims 1-4, wherein an osmotic pressure of the second buffer solution is 140-300 mOsmol/kg.

6. The forming structure according to any one of claims 1-5, wherein the second buffer solution comprises a salt solution of potassium chloride, sodium chloride, potassium ferricyanide, potassium ferrocyanide, sodium ferricyanide, sodium ferrocyanide, sodium carbonate, and sodium bicarbonate.

7. The forming structure according to claim 6, wherein the second buffer solution further comprises hepes, hepes-Na-hepes, or K₂HPO₄-KH₂PO₄.

8. The forming structure according to any one of claims 1-7, wherein the membrane solution prepares a bilayer membrane by self-assembly.

9. The forming structure according to any one of claims 1-8, wherein the membrane solution comprises an amphiphilic membrane material; and
the amphiphilic membrane material comprises any one or a combination of at least two of DPHPC, DPHPG, DPPC, POPC or DOPE.

10. The forming structure according to claim 9, wherein the membrane solution further comprises a solvent.

11. The forming structure according to claim 10, wherein the solvent comprises a combination of one or more of decane, dodecane, and n-octane and any one or at least two of AR20, AR30, or PDMS-9.

12. A forming method for a membrane, comprising forming the forming structure according to any one of claims 1-11.

13. The forming method according to claim 12, comprising:
under vacuum conditions, injecting the first buffer solution into the support body, using the second buffer solution to push the membrane solution along the support body to cover the surface of the first buffer solution, and standing to obtain the bilayer membrane.

14. The forming method according to claim 12, wherein the forming method comprises:
injecting the first buffer solution into the support body, using the first buffer solution to push the membrane solution along the support body to cover the surface of the first buffer solution, allowing the membrane solution to undergo self-assembly and reach a stable state, replacing the first buffer solution above the membrane solution with the second buffer solution, and standing to obtain the bilayer membrane.
